# EUROPEAN PATENT APPLICATION

(11) **EP 2 354 165 A1**
(43) Date of publication of application: **10.08.2011**
(21) Application number: 11152079.7
(22) Date of filing: 25.01.2011
(51) Int. Cl.: C08B 1/00, C08B 15/05, C08J 5/00, C08J 9/28, C09K 5/02, F28D 20/02, C08L 1/02

(54) **Aeropolysaccharides, composites and preparation thereof**

(30) Priority: 25.01.2010 US 297846 P
(71) Applicant: Technion Research and Development Foundation, Ltd., 32000 Haifa (IL)
(72) Inventor: Dmitry, Rein M., 36860, Nesher (IL); Cohen, Yachin, 34980, Haifa (IL)
(74) Representative: Harrison Goddard Foote

(57) **Abstract**

This invention is directed to polysaccharide based aerogels, related to herein as aeropolysaccharides (aerocellulose) and reinforced aeropolysaccharides, and preparation thereof by an environmentally friendly process.

## Description

### FIELD OF THE INVENTION

This invention is directed to polysaccharide based aerogels, related to herein as aeropolysaccharides (aerocellulose) and reinforced aeropolysaccharides, and preparation thereof by an environmentally friendly process.

### BACKGROUND OF THE INVENTION

Polysaccharides, including cellulose and lignin, are the most abundant polymers on earth, wherein both cellulose and lignin, as well as other polysaccharides are biodegradable, biocompatible, non-allergenic and are considered to be environmentally friendly substances. Therefore, the use of polysaccharides, including cellulose and lignin for various applications has been increasing over the years.

When preparing polysaccharide based products, various solvents are used in the different production processes, depending on the reaction conditions and on the desired characteristics of the end product. However, many known solvents are environmentally hazardous. In order for a solvent to be environmentally friendly, it must: (1) be non-toxic and/or easily biodegradable, thereby providing safe work conditions, (2) be efficiently recycled in order to avoid its propagation in ecosystems and (3) integrate a low energy production cycle.

One type of solvents that is known to be environmentally friendly is that of ionic liquids (related to herein as "ILs"). ILs are salts that have a relatively low melting point, i.e., below approximately 100°C. ILs have an extremely low vapor pressure, minimizing atmospheric solvent loss as well as flammability, and further, they are nearly completely recyclable. They also have low toxicity. Lately it has been found that certain ILs are used as solvents for polysaccharides, and therefore can be implemented in processes involving the production of polysaccharide based products.

Some known ILs that are used for polysaccharide dissolution are 1-butyl-3-methylimidazolium chloride (BMIMCI), 1-allyl-3-methylimidazolium chloride (AMIMCI) and 1-ethyl-3-methylimidazolium acetate (EMIMAc).

Various types of gels, including aerogels are prepared from polysaccharides such as cellulose and lignin.

Aerogels are characterized by their highly porous structure and their low solids content. Reference to various types of aerogels may be found in, e.g., Chemistry of Aerogels and Their Applications. A. C. Pierre, G. M. Pajonk. 2002, Chem. Rev., Vol. 102, pp. 4243-4265and US Patent 1,943,176.

Further, aerogels such as aerocellulose may be reinforced with various composites, including what is known in the art as all-cellulose composites. One known process for reinforcing a carbohydrate based aerogel, is that of reinforcing a starch based foam, utilizing natural cellulose fibers, calcium carbonate and polyvinyl alcohol (Review: current international research into cellulose nanofibres and nanocomposites, S. J. Eichhorn et al., J. Mater Science (2010) 45:1-33).

This process is used for improvement of the mechanical properties of starch food thermal insulation containers. The manufacturing process of reinforced starch based foam consists in baking of the starch/water/cellulose fibers/CaCO₃ or polyvinyl alcohol batter. Nevertheless, the resulting product, due to the nature of the starch, is very brittle, has low flexural strength, strain and elongation to break, is sensitive to moisture and is inclined to swell in water even at the room temperature. These properties drastically limit the practical application of such a material. Thus, there is a need in the art for reinforced carbohydrate aerogels with superior properties, such as reinforced aerocellulose.

Aerocellulose, including reinforced aerocellulose, may be prepared by dissolving the cellulose in an appropriate solvent, preferably an environmentally friendly solvent, such as an ionic liquid (IL). Once dissolved the cellulose is regenerated by the addition of an anti-solvent, such as water, methanol, ethanol or acetone, thereby forming a cellulose lyogel, which is a common intermediate product, precipitated during the cellulose regeneration from a solution, using an anti-solvent. The degree of crystallinity of the cellulose, or of any other polysaccharide used, can be manipulated during its regeneration by variation of the regeneration conditions. The solvent, e.g., the IL can be recovered, and reused, by any appropriate method, such as precipitant evaporation or freeze drying.

However, in order to form an aerogel from the lyogel, the anti-solvent must be removed from the lyogel, without collapsing the structure of the lyogel, i.e., the lyogel must be dried, while preserving the structure thereof. Since the anti-solvent is embedded in the pores of the lyogel structure, the removal thereof may cause the structure to collapse, due to the capillary forces in the pores, causing the walls of the pores to stick to one another. Methods known in the art for drying lyogels without harming their structure, so as to provide an aerogel, include the use of supercritical fluids drying, freeze drying or spray drying. Unfortunately, such methods are both cumbersome and economically disadvantageous.

Therefore, there is a need in the art for a process for preparing aeropolysaccharides and reinforced aeropolysaccharides, including aerocellulose, aerolignin, reinforced aerocellulose and reinforced aerolignin, that is environmentally friendly and that overcomes the disadvantages of the known methods, especially regarding the drying of the lyogel.

### SUMMARY OF THE INVENTION

This invention includes a process for preparing aeropolysaccharides comprising:
a. mixing polysaccharide in a reaction medium;
b. adding an anti-solvent to the reaction medium, which creates a lyogel that includes a polysaccharide structure and pores filed with the reaction medium;
c. adding a hydrophobization agent to the reaction medium;
d. removing excess amounts of the reaction medium found outside the pores of the lyogel; and
e. drying the lyogel by removing the reaction medium found inside the pores of the lyogel, without harming the structure of the lyogel.

This invention further includes a molten aeropolysaccharide, wherein the aeropolysaccharide is silylated.

This invention further includes an aeropolysaccharide prepared by:
a. mixing polysaccharide in a reaction medium;
b. adding an anti-solvent to the reaction medium, which creates a lyogel that includes a polysaccharide structure and pores filed with the reaction medium;
c. adding a hydrophobization agent to the reaction medium,;
d. removing excess amounts of the reaction medium found outside the pores of the lyogel; and
e. drying the lyogel by removing the reaction medium found inside the pores of the lyogel, without harming the structure of the lyogel.

This invention further includes the preparation of an aeropolysaccharide including the addition of an energy storage material before said drying step, and the use of the prepared aeropolysaccharide as a phase change material, wherein the energy storage material is found wither in the pores of the aeropolysaccharide.

In one embodiment, this invention is directed to a silylated aerocellulose or reinforced silylated aerocellulose. In another embodiment, the silylated aerocellulose or reinforced silylated aerocellulose has a moisture uptake of between 3-10%. In another embodiment, the silylated aerocellulose or reinforced silylated aerocellulose is molten.

In one embodiment, this invention is directed to aeropolysaccharide, aerocellulose, silylated aeropolysaccharide, silylated aerocellulose, reinforced aeropolysaccharide, reinforced aerocellulose, reinforced silylated aeropolysaccharide and reinforced silylated aerocellulose. In another embodiment the aeropolysaccharide, aerocellulose, silylated aeropolysaccharide, silylated aerocellulose, reinforced aeropolysaccharide, reinforced aerocellulose, reinforced silylated aeropolysaccharide or reinforced silylated aerocellulose comprise an energy storage material. In another embodiment, this invention is directed to the use of a silylated or non-silylated aeropolysaccharide, silylated or non silylated reinforced aeropolysaccharide as a phase change material (PCM), wherein said energy storage material is found within the pores of said aeropolysaccharide. In another embodiment, the polysaccharide is cellulose.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

In the context of this invention, the term "reaction medium" is used to include any materials added to the polysaccharide during the process for preparing the aeropolysaccharide.

In one embodiment, this invention provides a process for preparing aeropolysaccharides, comprising (a) maximizing the surface area of a polysaccharide in a reaction medium; (b) adding any appropriate anti-solvent to the reaction medium, thereby creating a lyogel that includes a polysaccharide structure and pores filed with the reaction medium; (c) adding any appropriate hydrophobization agent to the reaction medium, which reduces the surface tension between the pores of the lyogel and the reaction medium; (d) removing excess amounts of the reaction medium found outside the pores of the lyogel; and (e) drying the lyogel by removing the reaction medium found inside the pores of the lyogel, without harming the structure of the lyogel.

According to one embodiment, the process of the present invention further includes moulding, casting or compressing the lyogel before or during the removal of the excess reaction medium or before or during the drying of the lyogel.

According to one embodiment, the anti-solvent and the hydrophobization agent are added to the reaction medium together. According to further embodiments, the anti-solvent is added to the reaction medium before the hydrophobization agent. According to further embodiments, the anti-solvent is added to the reaction medium after the hydrophobization agent.

In one embodiment, the term "polysaccharide" refers in this invention to cellulose, lignin, hemicellulose, sucrose or starch. According to other embodiments, the polysaccharide is cellulose.

According to some embodiments, the process of this invention comprises a step of maximizing the surface area of a polysaccharide in a reaction medium. In one embodiment, the surface area of the polysaccharide is maximized by adding a solvent, thereby creating a polysaccharide solution. According to further embodiments, the surface area of the polysaccharide is maximized by adding an emulsifier, thereby creating an emulsion of the polysaccharide. According to additional embodiments, the surface area of the polysaccharide is maximized by preparing polysaccharide slurry, by the addition of any appropriate material or solvent.

According to this invention, the solvent is dimethyl sulfoxide/ammonium fluoride, dimethyl sulfoxide/formaldehyde, inorganic complexes such as cuprammonium hydroxide (cuam), cupriethylenediamine (cuene) or cadmium tris (1,2-ethanediamine) hydroxide (cadoxene), molten salt hydrates such as LiClO₄×3H₂O, ZnCl₂×4H₂O or LiSCN×2H₂O, ethylene diamine/ potassium thiocyanate, NH₄SCN/NH₃, N₂O₄/dimethyl formaldehyde, *N-*methylmorpholine oxide, *N,N*-dimethylacetamide/LiCl and NaOH/urea/water; or combination thereof.

According to one embodiment of the invention, the solvent is environmentally friendly. According to a further embodiment of the invention, the solvent is an ionic liquid (IL). According to yet a further embodiment, the IL is selected from the group comprising 1-butyl-3-methylimidazolium chloride (BMIMCI), 1-allyl-3-methylimidazolium chloride (AMIMCI) and 1-ethyl-3-methylimidazolium acetate (EMIMAc).

According to some embodiments, the process of this invention comprises a step of adding any appropriate anti-solvent to the reaction medium, thereby creating a lyogel that includes a polysaccharide structure and pores filed with the reaction medium. According to this invention, the anti-solvent is any appropriate material, or combination of materials, which causes the coagulation of the polysaccharide solution and the precipitation of lyogel. According to one embodiment, the anti-solvent is an environmentally friendly material. According to certain embodiments, the anti-solvent is water, methanol, ethanol, isopropanol, n-hexane or acetone. According to one embodiment, the anti-solvent is water.

Since the polysaccharide lyogel is hydrophilic, the surface tension between it, prior to any modifications, and the reaction medium is relatively high. Therefore, according to this invention, a hydrophobization agent is added, in order to reduce the surface tension between the polysaccharide and the reaction medium. According to this invention, the hydrophobization agent comprises any number of materials, any one of which may react with the polysaccharide or with any material found in the reaction medium, e.g., the solvent or the anti solvent. This reaction reduces the surface tension between the pores of the lyogel and the reaction medium, thereby simplifying the drying of the lyogel.

In one embodiment, the reaction of the hydrophobization agent with the reaction medium causes the formation of gases in the pores of the lyogel. The formation of such gases in the pores of the lyogel removes the reaction medium from the pores, essentially drying the lyogel and providing an aeropolysaccharide. When the pressure of the gasses is increased practically dry aeropolysaccharides are manufactured by first removing the excess reaction medium found outside the pores of the lyogel and then reducing the pressure around the lyogel. This causes the gasses, dissolved under pressure in the reaction medium, to create bubble in the lyogel pores, removing the reaction medium therefrom, thus drying the lyogel without causing the shrinkage thereof.

According to one embodiment, the anti-solvent is water and the hydrophobization agent includes a hydrophobic material, e.g., hexamethyldisiloxane (CH₃)₃Si-O-Si(CH₃)₃ (HMDSO), a silylation material, e.g., trimethylchlorosilane (CH₃)₃Si-Cl (TMCS) and a neutralizing material, e.g., pyridine. The HMDSO, TMCS and pyridine are added to the reaction medium after the formation of the polysaccharide lyogel. The TMCS and the pyridine are both water soluble, and therefore, they diffuse into the pores of the lyogel, which are filled with the anti-solvent, i.e., water. The TMCS and pyridine, which are water soluble, diffuses into the gel pores, wherein the TMCS reacts with the water filling the pores, forming HCl and additional HMDSO. Since HMDSO has a higher specific volume than water and aqueous HCl, the HMDSO replaces the water and the HCl and any residual solvent found in the pores of the gel. Further, the pyridine reacts with the HCl, so that the HCl does not harm the lyogel structure.

The chemical reactions occurring after both the HMDSO and the TMCS are added are as follows:
Reaction of TMCS with water in the pores, providing HMDSO and HCl:

   2(CH₃)₃SiCl + H₂O → (CH₃)₃Si-O-Si(CH₃)₃ + 2HCl (1)
Reaction between HMDSO and HCl, providing TMCS and water:

   (CH₃)₃Si-O-Si(CH₃)₃ + 2HCl → 2(CH₃)₃SiCl + H₂O (2)

In one embodiment reaction (1) is spontaneous and exothermic. In another embodiment reaction (2) occurs, however, the equilibrium leans towards reaction (1), since the HCl is removed from the gel together with the water, and replaced by the HMDSO, in which neither the water, nor the HCl, are miscible. The removal of the HCl is advantageous also since the acidic HCl may cause degradation of the polysaccharide. Further, as mentioned above, pyridine, or any other appropriate organic or inorganic base, e.g. imidazole or NaOH, may be added in order to neutralize the HCl.

In one embodiment, the surface of the lyogel of this invention comprises hydroxyl groups, e.g., the polysaccharide is cellulose. In another embodiment, the TMCS reacts both with the water in the pores and with the hydroxyl groups on the surface in a silylation reaction, changing the hydroxyl groups to trimethylsilyl groups, according to the following reaction:

TMCS + Cell-OH ⇆ Cell-O-Si(CH₃)₃ + HCl (3)

In one embodiment, reaction (3) yields a relatively hydrophobic cellulose lyogel (and similarly can yield a relatively hydrophobic polysaccharide lyogel); however, it also causes the pores of the lyogel to have a relatively low intrinsic surface tension regarding the filling reaction medium, thus allowing minimal shrinkage of the gel upon drying. Since HCl is removed from the system with the water and/or neutralized with pyridine or any other appropriate material, the equilibrium leans towards the silylation reaction.

Thus, depending on the reaction conditions, there are two possible reaction paths. At lower TMCS activity (TMCS/lyogel volume ratio is less than about 5%, at room temperature) the polysaccharide is mostly unreacted with the TMCS and thus a hydrophilic polysaccharide lyogel is imbibed with the hydrophobic liquid HMDSO. At higher TMCS activity (TMCS/lyogel volume ratio is more than about 10%, at a temperature of about 60°C), silylation of the polysaccharide lyogel pore surface can occur concurrently. Both of the above are desirable consequences according to different embodiments of the invention.

In one embodiment, the final stage of the process of the invention includes drying the lyogel. In another embodiment, drying the lyogel includes removing the reaction medium from the pores of the lyogel, without harming the structure thereof. In another embodiment, drying the lyogel includes maximizing the hydrophobic liquid / hydrophilic non-silated polysaccharide contact angle in the lyogel pores, e.g., by causing a silylation reaction on the surface of the polysaccharide using, e.g., HMDSO, TMCS and pyridine, that has minimal, or even negative capillary forces. In another embodiment, high concentration of TMCS yields highly hydrophobic silylated polysaccharide, and the pores are filled by HMDSO, giving a low intrinsic surface tension, thus allowing minimal shrinkage of the lyogel. In another embodiment, the reaction conditions must be set so as to obtain the optimal conditions for drying the lyogel without causing the shrinkage thereof. According to certain embodiments, the lyogel is dried at a temperature of approximately 90°C at a reduced pressure of approximately 50mmHg.

According to further embodiments, the hydrophobization agent includes a hydrophobic material that reacts with the hydrophilic hydroxyl groups on the surface of the polysaccharide, before it has been precipitated with an anti-solvent, to form a lyogel.

According to some embodiments, the hydrophobic material is hexamethyldisilazane (CH₃)₃Si-NH-Si(CH₃)₃ (HMDS) or bis(trimethylsilyl)carbamate (CH₃)₃Si-O-CO-NH-Si(CH₃)₃ (BSC). Either HMDS, BSC, or a mixture thereof. In another embodiment, hexamethyldisilazane (CH₃)₃Si-NH-Si(CH₃)₃ (HMDS) or bis(trimethylsilyl)carbamate (CH₃)₃Si-O-CO-NH-Si(CH₃)₃ (BSC)or combination therof are added to the reaction medium, where they react with the hydroxyl groups on the surface of the polysaccharide forming hydrophobic trimethylsilyl groups, according to the following reactions:

(CH₃)₃Si-NH-Si(CH₃)₃ + 2(Polysaccharide-OH) → 2(Polysaccharide-O-Si(CH₃)₃) + NH₃↑ (4)

2(Polysaccharide-OH) + (CH₃)₃Si-O-CO-NH-Si(CH₃)₃ → 2(Polysaccharide-O-Si(CH₃)₃) + NH₃↑ + CO₂↑ (5)

In one embodiment one or more hydrophobization materials are used in the process of this invention. In one embodiment the different molar ratios of the HMDS/BSC and the polysaccharide, determine the degree of substitution of the hydroxyl groups with the trimethylsilyl groups, which influences the physical-chemical properties of the lyogel.

According to certain embodiments, small amounts of tetrahydrofuran, chloroform, or any other appropriate material are optionally added for improving the solubility of the trimethylsilyl polysaccharide lyogel in the solvent, e.g., the ionic liquid.

In embodiments where the hydrophobization agent is added to the reaction medium before the addition of the anti-solvent, once the silylation reaction takes place the anti-solvent is added to the reaction medium, causing the precipitation of a silylated hydrophobic polysaccharide lyogel.

According to one embodiment, following adding the hydrophobization agent to the reaction medium, the process of this invention includes the removal of the excess reaction medium, found outside the pores of the lyogel. According to some embodiment, the excess reaction medium is removed by pouring it out of the reaction vessel or by any other appropriate means.

According to the process of this invention, the lyogel is dried by removing the reaction medium from the pores of the lyogel optionally following adding the hydrophobization agent. According to some embodiment, the lyogel is dried in an oven, by vacuum, in a heated vacuum oven, or by any other appropriate means, ensuring that the lyogel is dried, without harming the structure thereof, thereby providing an aeropolysaccharide. According to further embodiments, the lyogel is cast, moulded or compressed before or during the removal of the excess reaction medium or before or during the drying of the lyogel. According to some embodiments, the lyogel is dried directly in the mould.

According to further embodiments of the invention, a reinforced aeropolysaccharide composite is prepared by adding any known reinforcements, such as unidirectional polymers or non-organic fibers, stapled fibers, nonwoven fiber mats, films, clothes, whiskers, powders or any combination thereof. According to this invention, the reinforcements are added at any appropriate stage of the process, e.g., during the preparation the polysaccharide solution during the silylation reaction or after the lyogel precipitation. According to this invention, other than the addition of reinforcements to the reaction medium, the process for preparing reinforced aeropolysaccharides is the same as described for preparing non-reinforced aeropolysaccharides. In another embodiment, the reinforcement material is cellulose.

However, when preparing reinforced aeropolysaccharide there must be maximal protection of physical-mechanical properties of the reinforcing elements during processing and maximal adhesion between reinforcement and aeropolysaccharide matrix. This can be achieved by any appropriate means.

According to one embodiment, the protection of the physical mechanical properties of the reinforcing elements is performed by surface passivation. According to this embodiment, the reinforcement materials are protected by changing their surface properties. According to one embodiment, when the reinforcement materials are cellulose, they are protected by silylation of their surface, either prior to their addition to the reaction medium or after their addition to the reaction medium, leading to the formation of a silyl cellulose, for example, trimethylsilylcellulose, layer on their surface, which has a low solubility in the solvent, e.g., an ionic liquid, thus slowing the reinforcing material dissolution, protecting its mechanical properties and, due to the partial swelling of the silyl cellulose layer, enhancing adhesion between the reinforcing materials and the polysaccharide matrix.

The density of the aeropolysaccharide materials, prepared according to the process of this invention, when chlorinated silanes, such as (CH₃)SiCl₃, (CH₃)₂SiCl₂ and TMCS are added at a ratio of about 7:2:1, respectively, is approximately 0.7 - 1.4 g/cm³, having an internal surface area of approximately 20 - 200 m²/g and an average pore size of approximately 0.5 - 200 µm, depending on the initial polysaccharide solution concentration, polysaccharide/silylation material molar ratio and the temperature of the process. Generally, the pores of the lyogel are smaller the higher the concentration of the polysaccharide is. Further, the pore size deviation becomes smaller with increasing polysaccharide content.

The density of the aerocellulose materials, prepared according to the process of this invention, when chlorinated silanes, such as (CH₃)SiCl₃, (CH₃)₂SiCl₂ and TMCS are added at a ratio of about 7:2:1, respectively, is approximately 0.7 - 1.4 g/cm³, having an internal surface area of approximately 20 - 200 m²/g and an average pore size of approximately 0.5 - 200 µm, depending on the initial polysaccharide solution concentration, polysaccharide/silylation material molar ratio and the temperature of the process. Generally, the pores of the lyogel are smaller the higher the concentration of the polysaccharide is. Further, the pore size deviation becomes smaller with increasing polysaccharide content.

The reinforced aeropolysaccharide composite prepared according to this invention has a tensile strength of up to approximately 1.3 GPa, a Young's modulus of approximately 25 GPa and an elongation to break of approximately 8%. An isotropic composite, produced by dispersing chopped reinforcing cellulose fibers in the aeropolysaccharide has a tensile strength of up to approximately 300 MPa and Young's modulus of approximately 12 GPa, flexural strength of approximately 5-15 MPa and elongation to break approximately of 5-12%. The density of the prepared aeropolysaccharide composite materials, containing approximately 20% reinforcing fibers, is approximately 0.1 - 1.4 g/cm³, having an internal surface area of approximately 150 - 400 m²/g and an average pore size of approximately 0.05 - 200 µm, depending on the initial polysaccharide solution concentration, polysaccharide/silylation material molar ratio and the temperature of the process. Generally, the pores of the lyogel are smaller the higher the concentration of the polysaccharide is. Further, the pore size deviation becomes smaller with increasing polysaccharide content.

According to one embodiment, the reinforced aerocellulose composite prepared according to the process of this invention has a tensile strength of between 0.5 and 1.3 GPa. According to one embodiment, the reinforced aerocellulose composite prepared according to this invention has a tensile strength of between 0.7 and 1.3 GPa. According to one embodiment, the reinforced aerocellulose composite prepared according to this invention has a tensile strength of between 0.9 and 1.3 GPa. According to one embodiment, the reinforced aerocellulose composite prepared according to this invention has a tensile strength of between 1.1 and 1.3 GPa.

According to one embodiment, the reinforced aerocellulose composite prepared according to this invention has a Young's modulus of 15-35 GPa. According to one embodiment, the reinforced aerocellulose composite prepared according to this invention has a Young's modulus of 20-30 GPa. According to one embodiment, the reinforced aerocellulose composite prepared according to this invention has a Young's modulus of 22-28 GPa.

According to one embodiment, the reinforced aerocellulose composite prepared according to this invention has an elongation to break of 2-14%. According to one embodiment, the reinforced aerocellulose composite prepared according to this invention has an elongation to break of 4-12%. According to one embodiment, the reinforced aerocellulose composite prepared according to this invention has an elongation to break of 6-10%. According to one embodiment, the reinforced aerocellulose composite prepared according to this invention has an elongation to break of 7-9%.

According to one embodiment, the isotropic composite, produced by randomly dispersing chopped reinforcing cellulose fibers in the aerocellulose has a tensile strength of 100-300 MPa. According to one embodiment, the isotropic composite, produced by dispersing chopped reinforcing cellulose fibers in the aerocellulose has a tensile strength of 150-300 MPa. According to one embodiment, the isotropic composite, produced by dispersing chopped reinforcing cellulose fibers in the aerocellulose has a tensile strength of 200-300 MPa. According to one embodiment, the isotropic composite, produced by dispersing chopped reinforcing cellulose fibers in the aerocellulose has a tensile strength of 250-300 MPa.

According to one embodiment, the isotropic composite, produced by dispersing chopped reinforcing cellulose fibers in the aerocellulose has a Young's modulus of 6-18 GPa. According to one embodiment, the isotropic composite, produced by dispersing chopped reinforcing cellulose fibers in the aerocellulose has a Young's modulus of 8-16 GPa. According to one embodiment, the isotropic composite, produced by dispersing chopped reinforcing cellulose fibers in the aerocellulose has a Young's modulus of 10-14 GPa. According to one embodiment, the isotropic composite, produced by dispersing chopped reinforcing cellulose fibers in the aerocellulose has a Young's modulus of 11-13 GPa.

According to one embodiment, the isotropic composite, produced by dispersing chopped reinforcing cellulose fibers in the aerocellulose has a flexural strength of 3-17 MPa. According to one embodiment, the isotropic composite, produced by dispersing chopped reinforcing cellulose fibers in the aerocellulose has a flexural strength of 5-15 MPa. According to one embodiment, the isotropic composite, produced by dispersing chopped reinforcing cellulose fibers in the aerocellulose has a flexural strength of 7-13 MPa. According to one embodiment, the isotropic composite, produced by dispersing chopped reinforcing cellulose fibers in the aerocellulose has a flexural strength of 9-11 MPa. According to one embodiment, the isotropic composite, produced by dispersing chopped reinforcing cellulose fibers in the aerocellulose has a flexural strength of 10 MPa.

According to one embodiment, the isotropic composite, produced by dispersing chopped reinforcing cellulose fibers in the aerocellulose has an elongation to break of 3-14%. According to one embodiment, the isotropic composite, produced by dispersing chopped reinforcing cellulose fibers in the aerocellulose has an elongation to break of 6-11%. According to one embodiment, the isotropic composite, produced by dispersing chopped reinforcing cellulose fibers in the aerocellulose has an elongation to break of 8-9%.

According to one embodiment, the density of the prepared aerocellulose composite materials of this invention, containing approximately 20% reinforcing fibers, is 0.2 - 0.9 g/cm³. According to one embodiment, the density of the prepared aerocellulose composite materials, containing approximately 20% reinforcing fibers, is 0.3 - 0.8 g/cm³. According to one embodiment, the density of the prepared aerocellulose composite materials, containing approximately 20% reinforcing fibers, is 0.4 - 0.7 g/cm³. According to one embodiment, the density of the prepared aerocellulose composite materials, containing approximately 20% reinforcing fibers, is 0.5 - 0.6 g/cm³.

According to one embodiment, the prepared aerocellulose composite materials of this invention, containing approximately 20% reinforcing fibers have an internal surface area of 50 - 500 m²/g. According to one embodiment, the prepared aerocellulose composite materials, containing approximately 20% reinforcing fibers have an internal surface area of 100-450 m²/g. According to one embodiment, the prepared aerocellulose composite materials, containing approximately 20% reinforcing fibers have an internal surface area of 200-350 m²/g. According to one embodiment, the prepared aerocellulose composite materials, containing approximately 20% reinforcing fibers have an internal surface area of 250 - 300 m²/g.

According to one embodiment, the prepared aerocellulose composite materials of this invention, containing approximately 20% reinforcing fibers have an average pore size of 5-190 µm. According to one embodiment, the prepared aerocellulose composite materials, containing approximately 20% reinforcing fibers have an average pore size of 10 - 180 µm. According to one embodiment, the prepared aerocellulose composite materials, containing approximately 20% reinforcing fibers have an average pore size of 20- 170 µm. According to one embodiment, the prepared aerocellulose composite materials, containing approximately 20% reinforcing fibers have an average pore size of 30 - 160 µm. According to one embodiment, the prepared aerocellulose composite materials, containing approximately 20% reinforcing fibers have an average pore size of 40-150 µm. According to one embodiment, the prepared aerocellulose composite materials, containing approximately 20% reinforcing fibers have an average pore size of 50-140 µm. According to one embodiment, the prepared aerocellulose composite materials, containing approximately 20% reinforcing fibers have an average pore size of 60-130 µm. According to one embodiment, the prepared aerocellulose composite materials, containing approximately 20% reinforcing fibers have an average pore size of 70 - 120 µm. According to one embodiment, the prepared aerocellulose composite materials, containing approximately 20% reinforcing fibers have an average pore size of 80 - 110 µm. According to one embodiment, the prepared aerocellulose composite materials, containing approximately 20% reinforcing fibers have an average pore size of 90-100 µm.

Generally, the pore size, surface area and density of the reinforced and non-reinforced aeropolysaccharides, including aerocellulose, of this invention are the same. However, the tensile strength and Young's modulus of the non-reinforced aeropolysaccharides, including aerocellulose, are lower, and are approximately 50MPa and 0.3GPa, respectively. Further, the elongation to break of the non-reinforced aeropolysaccharides, including aerocellulose, is higher than that of the reinforced aerogels of this invention, and is approximately 18% versus up to about 15% of the reinforced aerogel.

According to some embodiments, it is desired to incorporate a polymeric siloxane matrix in the pores of the lyogel. The incorporation of polymeric siloxanes in the pores of the lyogel prevents pore shrinkage, and further, provides a hybrid composite material with unique properties. The use of suitable reactants and reactions, such as the hydrolysis of the phenylethyl-, diethyl-, phenylmethyl-, dimethyl-, and diphenyl-dichlorosilanes under mild conditions, can result in a polysaccharide lyogel having pores incorporating a polymeric siloxane matrix, which is even further crosslinked to the polysaccharide pore surface. Such reactants may be used when preparing either non-reinforced or reinforced aeropolysaccharides.

The non-reinforced or reinforced aeropolysaccharides prepared according to this invention have the ability of self gluing, due to the unique viscoelastic properties of the polysiloxane component. This self gluing does not harm the structure of the prepared aeropolysaccharide, since it occurs only on the surface, and only between the siloxane components of the substituted polysaccharide.

According to further embodiments of the invention, the polysaccharide lyogels, which according to certain embodiments include reinforcing composites, and are saturated by a hydrophobic material, e.g., HMDSO, are conserved in the wet state, i.e., in the form of a prepreg, for subsequent use.

According to additional embodiments, polysiloxanes are used as fillers for the pores of the lyogel, thereby aiding in preventing pore shrinkage. Polysiloxanes are prepared by the addition of halogenated silanes, such as chlorinated silanes: trimethylchlorosilane [(CH₃)₃SiCl], dimethyldichlorosilane [(CH₃)₂SiCl₂] or methyltrichlorosilane [(CH₃)SiCl₃]. According to certain embodiments, non-halogenated silanes, such as tetraethoxysilane, are added to prevent pore shrinkage. The addition of such silanes to the polysaccharide reaction medium causes also the crosslinking of the prepared polysiloxane and the polysaccharide matrix, thus resulting is a crosslinked aeropolysaccharide, impregnated by polysiloxane.

The length and branching of the resulting polysiloxane molecules is dependent on the concentration of chain ending groups of the silane that exist in the reaction mixture. When adding chlorinated silanes, reactions similar to reactions (1)-(3) detailed above occur, however, in the first stage, corresponding non-stable siloxanes are produced, which immediately polymerize to polysiloxane compounds:

(CH₃)SiCl₃ + 3H₂O → (CH₃)Si(OH)₃ + 3HCl (6)

n(CH₃)Si(OH)₃→[(CH₃)SiOi_{1.5}]ₙ + 1.5nH₂O (7)

n(CH₃)₂SiCl₂+nH₂O→[(CH₃)₂SiO]ₙ+2nHCl (8)

Reactions (6)-(8) are accompanied with crosslinkage of the cellulose and the siloxanes, according to equations:

(CH₃)₂SiCl₂+ 2Cell-OH ⇆ Cell-O-Si(CH₃)₂-O- Cell + 2HCl (9)

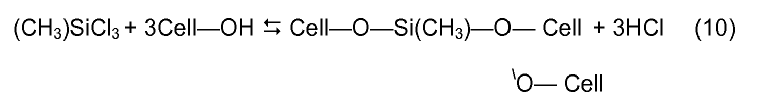

According to further embodiments, a mixture of chlorinated silanes, such as (CH₃)SiCl₃, (CH₃)₂SiCl₂ and TMCS, at a weight ratio of approximately 7:2:1, are added to the reaction medium.

According to further embodiments, the chlorinated silanes used in this invention, such as used in equations (9) or (10) are replaced by acetate silanes, or any other appropriate material, thereby resulting in the non-toxic by-product of acetic acid.

In one embodiment the aeropolysaccharide, aerocellulose, silylated aeropolysaccharide, silylated aerocellulose, reinforced aeropolysaccharide, reinforced aerocellulose, reinforced silylated aeropolysaccharide or reinforced silylated aerocellulose of this invention comprise an energy storage material. In another embodiment the energy storage material is encapsulated.

In another embodiment, this invention is directed to the use of a silylated or non-silylated aeropolysaccharide, silylated or non silylated reinforced aeropolysaccharide as a phase change material (PCM), wherein said energy storage material is found within the pores of said aeropolysaccharide. In another embodiment, the polysaccharide is cellulose.

According to some embodiments, this invention further includes the use of the aeropolysaccharide of this invention as a phase change material (PCMs) for energy storage. According to this embodiment, an energy storage material is added as a filler for the pores of the lyogel, wherein the lyogel is silylated or not-silylated. The addition of such a filler aids in preventing pore shrinkage, and further, provides the prepared aerogel with energy storage properties. Due to the high value of latent heat of phase transition in the filler component they can act as PCMs and the polysaccharide, e.g., cellulose, component ensures the shape stabilization of the prepared material or device.

Generally, all known energy storage materials, which are a part of a PCMs, show considerable volume changes (approximately 5 to 15 vol.%) during melting and solidification. Therefore, one of the main demands of a PCMs is its possibility to withstand frequent changes in volume of the energy storage component, as the phase change occurs. Such volume changes can change the material's shape, dimensions or even destroy it, and therefore, the PCM must be constructed so that it is unharmed by the volume change of the energy storage material during the phase change.

One way to provide a PCM that is not harmed by the volume change of the energy storage component is microencapsulation. The microencapsulation of the energy storage component has at the least two advantages: 1) it improves the heat transfer to the surroundings because of the large surface to volume ratio of the capsules; and 2) it improves the cycling stability since the phase separation is restricted to microscopic distances.

During the preparation of the PCM according to this invention, the encapsulation of energy storage component, i.e., the filler, occurs by polysaccharide lyogel precipitation when the energy storage component is in the molten state. The lyogel is then dried and cast or molded as necessary. When cooled, the phase change of the energy storage component leads to a reduction of its volume. Therefore, when cooled, the polysaccharide capsule, i.e., the pores in the aeropolysaccharide, is only partially filled with the energy storage material, i.e., the filler, due to the reduction in volume of the filler. When the PCM of this invention is then heated, the energy storage component expands and fills the pores of the aerogel; however, it does not destroy the structure of the aerogel, since the energy storage component had room for expansion within the pores.

According to some embodiments, the energy storage material is a hydrophobic paraffin wax, an alkane, a fatty acid, polyethylene glycol, n-eicosane, or any appropriate material possessing a high value of latent heat.

According to some embodiments, the filling material is dispersed and subsequently microcapsulated during precipitation into the porous lyogel by sonication of the mixture of the filler with the polysaccharide solution in presence of appropriate surfactant, e.g., sorbitan monooleate.

The reinforced and the non-reinforced aerocellulose materials prepared according to this invention is highly stable, light weight, has controlled porosity, is biodegradable, biocompatible and is environmentally friendly throughout the, relatively simple and cheap, production process.

According to this invention, high strength and high modulus materials with a predetermined pore structure are prepared.

In one embodiment, this invention is directed to aeropolysaccharide, aerocellulose, silylated aeropolysaccharide, silylated aerocellulose, reinforced aeropolysaccharide, reinforced aerocellulose, reinforced silylated aeropolysaccharide and reinforced silylated aerocellulose.

In one embodiment, this invention is directed to a silylated aerocellulose or reinforced silylated aerocellulose. In another embodiment, the silylated aerocellulose or reinforced silylated aerocellulose has a moisture uptake of between 3-10%. In another embodiment, the silylated aerocellulose or reinforced silylated aerocellulose is molten.

In another embodiment, the silylated aeropolysaccharide or reinforced silylated aeropolysaccharide is molten.

In another embodiment, the silylated aeropolysaccharide or reinforced silylated aeropolysaccharide has a moisture uptake of between 3-10%.

In one embodiment, the silylated aerocellulose and the reinforced silylated aerocellulose have a limited moisture uptake, can be molten and can be hydrolyzed. According to certain embodiments, the moisture uptake of the aerocellulose and/or the reinforced aerocellulose is about 2-12%wt. According to certain embodiments, the moisture uptake of the aerocellulose and/or the reinforced aerocellulose is about 3-10%wt. According to certain embodiments, the moisture uptake of the aerocellulose and/or the reinforced aerocellulose is about 5-9%wt. According to certain embodiments, the moisture uptake of the aerocellulose and/or the reinforced aerocellulose is about 6-7%wt.

Controlling the hydrophobicity of the non-reinforced aeropolysaccharides or the reinforced aeropolysaccharides, according to the invention, limits the moisture uptake of the produced silylated aeropolysaccharides, or reinforced silylated aeropolysaccharides, thereby enabling the use thereof in various biocomposites, which currently are limited by the moisture uptake of known aeropolysaccharides.

In one embodiment, the non-reinforced silylated aeropolysaccharides and the reinforced silylated aeropolysaccharides are molten. According to the degree of substitution and content of silylated polysaccharide, its melting temperature varies in the range of 245-310 °C (under anaerobic conditions). This enables the treatment of the silylated aeropolysaccharides and the reinforced silylated aeropolysaccharides of this invention as thermoplastic materials. For examples, extrusion, compression, compaction and rolling may be used. Further, the silylated aeropolysaccharides and the reinforced silylated aeropolysaccharides flakes and beads could be sintered to any desirable shape. Hot compaction of the aeropolysaccharides and the reinforced aeropolysaccharides sufficiently increases the composite inter-component adhesion and, as a result, improves its mechanical properties. Hot compression of the aeropolysaccharides and the reinforced aeropolysaccharides allows controlling the aeropolysaccharides matrix porosity in a wide range up to full monolitization, which sufficiently influences the thermodynamic characteristics of aeropolysaccharides and the reinforced aeropolysaccharides, such as their density and thermoconductivity. According to some embodiments the polysaccharide is cellulose and therefore the prepared silylated aerocellulose can be molten hydrolyzed and has a limited moisture uptake. Further, the silylated aerocellulose of this invention can be treated as a thermoplastic material.

Additionally, the silylated non-reinforced aeropolysaccharides and the silylated reinforced aeropolysaccharides of this invention may be hydrolyzed using dilute acid solutions or acid vapors. According to one embodiment, the silylated reinforced or non-reinforced aeropolysaccharide that can be hydrolyzed is silylated aerocellulose. The hydrolysis leads to substitution of the silylated groups of the aeropolysaccharide with hydroxyl groups. Since the aeropolysaccharide is highly porous, this reaction takes place throughout the aeropolysaccharide, including on the surface of the pores. As a result of the hydrolysis, the mechanical properties of the aeropolysaccharide are changed, e.g., the stiffness, the resistance to environmental conditions, the working temperature and the biodegradability are all enhanced. Similar properties are enabled also by crosslinking, however, according to this embodiment the hydrolysis process is fully reversible, and therefore, the aeropolysaccharide of this invention is a novel reversibly chemical crosslinked aeropolysaccharide. Thus, the aeropolysaccharide of this invention possesses undeniable advantages over known crosslinked or thermoset plastics in its easiness of machining, recycling and possibility of self-healing.

The above disclosure relates to the use of polysaccharides and the preparation of various types of aeropolysaccharides therefrom. According to one embodiment, the polysaccharide is cellulose, thus this invention provides various types of aerocellulose and reinforced aerocellulose, as well as processes for preparing the same. According to a further embodiment, the polysaccharide is lignin, thus this invention provides various types of aerolignin and reinforced aerolignin, as well as processes for preparing the same. According to a further embodiment, the polysaccharide is hemicellulose, thus this invention provides various types of aerohemicellulose and reinforced aerohemicellulose, as well as processes for preparing the same. According to a further embodiment, the polysaccharide is sucrose, thus this invention provides various types of aerosucrose and reinforced aerosucrose, as well as processes for preparing the same. According to a further embodiment, the polysaccharide is starch, thus this invention provides various types of aerostarch and reinforced aerostarch, as well as processes for preparing the same.

According to some embodiments, aerocellulose is prepared by first preparing a 0.01-30% w/w solution of microcrystalline cellulose powder in a solvent such as an ionic liquid, e.g., 1-ethyl-3-methylimidazolium acetate (EMIMAc), at a temperature of 20-150°C. According to some embodiments the concentration of the solution is 1-25%w/w. According to some embodiments the concentration of the solution is 2-20%w/w. According to some embodiments the concentration of the solution is 0.05-30%w/w. According to some embodiments the concentration of the solution is 5-18%w/w. According to some embodiments the concentration of the solution is 7-15%w/w. According to some embodiments the concentration of the solution is 10-12%w/w. According to some embodiments, the solution is prepared at a temperature of 30-140°C. According to some embodiments, the solution is prepared at a temperature of 40-130°C. According to some embodiments, the solution is prepared at a temperature of 50-120°C. According to some embodiments, the solution is prepared at a temperature of 60-110°C. According to some embodiments, the solution is prepared at a temperature of 70-100°C. According to some embodiments, the solution is prepared at a temperature of 80-90°C.

According to some embodiments, the microcrystalline cellulose powder is dissolved under heating for 1-20 minutes, thereby inducing the swelling of the powder. According to some embodiments, the microcrystalline cellulose powder is dissolved under heating for 5-15 minutes. According to some embodiments, the microcrystalline cellulose powder is dissolved under heating for 10 minutes.

According to some embodiment, water is used as the anti solvent, wherein 20-40ml of water are added for each 100ml of the cellulose solution. According to further embodiments, 25-35ml of water are added for each 100ml of the cellulose solution. According to further embodiment, 30ml of water are added for each 100ml of the cellulose solution. Once the antisolvent is added, the cellulose lyogel is formed.

According to some embodiments, the hydrophobization agent includes the hydrophobic material hexamethyldisiloxane (CH₃)₃Si-O-Si(CH₃)₃ (HMDSO), which is added to the reaction medium in an amount of approximately 100ml per 100gr of lyogel. According to certain embodiments, the amount of HMDSO is 50-150ml per 100gr lyogel. According to certain embodiments, the amount of HMDSO is 60-140ml per 100gr lyogel. According to certain embodiments, the amount of HMDSO is 70-130ml per 100gr lyogel. According to certain embodiments, the amount of HMDSO is 80-120ml per 100gr lyogel. According to certain embodiments, the amount of HMDSO is 90-110ml per 100gr lyogel.

According to certain embodiments, trimethylchlorosilane (TMCS) is added to the reaction medium in an amount of 0.0-0.4 mol TMCS per mol cellulose. According to further embodiments, the amount of TMCS added is 0.1-0.3 mol TMCS per mol cellulose. According to further embodiments, the amount of TMCS added is 0.2 mol TMCS per mol cellulose.

According to certain embodiments, the TMCS is added at a temperature of 20-90°C. According to certain embodiments, the TMCS is added at a temperature of 30-80°C. According to certain embodiments, the TMCS is added at a temperature of 40-70°C. According to certain embodiments, the TMCS is added at a temperature of 50-60°C.

According to certain embodiments, the excess reaction medium is removed from the reaction vessel prior to the drying of the lyogel, i.e., the removal of the reaction medium from within the pores of the lyogel. According to embodiments of the invention, the lyogel may be cast, compressed or molded before or during the removal of the excess reaction medium or before or during the drying of the lyogel.

According to certain embodiments, the lyogel is dried in a heated vacuum oven. According to other embodiments, the lyogel is dried in the mould. According to some embodiments, the lyogel is dried at a temperature of 120°C. According to some embodiments, the lyogel is dried at a temperature of 110-130°C. According to some embodiments, the lyogel is dried at a temperature of 100-140°C. According to some embodiments, the lyogel is dried over a period of two hours. According to some embodiments, the lyogel is dried over a period of 1-3 hours. According to some embodiments, the lyogel is dried over a period of 2-4 hours. According to some embodiments, the lyogel is dried over a period of at least two hours. According to some embodiments, the lyogel is dried over a period of less than two hours.

According to some embodiments, aeropolysaccharide is prepared by first preparing a 0.01-30% w/w solution of the polysaccharide in a solvent such as an ionic liquid, e.g., 1-ethyl-3-methylimidazolium acetate (EMIMAc), at a temperature of 20-150°C. According to some embodiments the concentration of the solution is 1-25%w/w. According to some embodiments the concentration of the solution is 2-20%w/w. According to some embodiments the concentration of the solution is 0.05-30%w/w. According to some embodiments the concentration of the solution is 5-18%w/w. According to some embodiments the concentration of the solution is 7-15%w/w. According to some embodiments the concentration of the solution is 10-12%w/w. According to some embodiments, the solution is prepared at a temperature of 30-140°C. According to some embodiments, the solution is prepared at a temperature of 40-130°C. According to some embodiments, the solution is prepared at a temperature of 50-120°C. According to some embodiments, the solution is prepared at a temperature of 60-110°C. According to some embodiments, the solution is prepared at a temperature of 70-100°C. According to some embodiments, the solution is prepared at a temperature of 80-90°C.

According to some embodiments, the polysaccharide was dissolved under heating for 1-20 minutes, thereby inducing the swelling of the powder. According to some embodiments, the polysaccharide was dissolved under heating for 5-15 minutes. According to some embodiments, the polysaccharide was dissolved under heating for 10 minutes.

According to some embodiment, water is used as the anti solvent, wherein 20-40ml of water are added for each 100ml of the polysaccharide solution. According to further embodiments, 25-35ml of water are added for each 100ml of the polysaccharide solution. According to further embodiment, 30ml of water are added for each 100ml of the polysaccharide solution. Once the antisolvent is added, the polysaccharide lyogel is formed.

According to some embodiments, the hydrophobization agent includes the hydrophobic material hexamethyldisiloxane (CH₃)₃Si-O-Si(CH₃)₃ (HMDSO), which is added to the reaction medium in an amount of approximately 100ml per 100gr of lyogel. According to certain embodiments, the amount of HMDSO is 50-150ml per 100gr lyogel. According to certain embodiments, the amount of HMDSO is 60-140ml per 100gr lyogel. According to certain embodiments, the amount of HMDSO is 70-130ml per 100gr lyogel. According to certain embodiments, the amount of HMDSO is 80-120ml per 100gr lyogel. According to certain embodiments, the amount of HMDSO is 90-110ml per 100gr lyogel.

According to certain embodiments, trimethylchlorosilane (TMCS) is added to the reaction medium in an amount of 0.0-0.4 mol TMCS per mol polysaccharide. According to further embodiments, the amount of TMCS added is 0.1-0.3 mol TMCS per mol polysaccharide. According to further embodiments, the amount of TMCS added is 0.2 mol TMCS per mol polysaccharide.

According to certain embodiments, the TMCS is added at a temperature of 20-90°C. According to certain embodiments, the TMCS is added at a temperature of 30-80°C. According to certain embodiments, the TMCS is added at a temperature of 40-70°C. According to certain embodiments, the TMCS is added at a temperature of 50-60°C.

According to certain embodiments, the excess reaction medium is removed from the reaction vessel prior to the drying of the lyogel, i.e., the removal of the reaction medium from within the pores of the lyogel. According to embodiments of the invention, the lyogel may be cast, compressed or moulded before the removal of the excess reaction medium, before the drying of the lyogel or during either of the above.

According to certain embodiments, the lyogel is dried in a heated vacuum oven. According to other embodiments, the lyogel is dried in the mould. According to some embodiments, the lyogel is dried at a temperature of 120°C. According to some embodiments, the lyogel is dried at a temperature of 110-130°C. According to some embodiments, the lyogel is dried at a temperature of 100-140°C. According to some embodiments, the lyogel is dried over a period of two hours. According to some embodiments, the lyogel is dried over a period of 1-3 hours. According to some embodiments, the lyogel is dried over a period of 2-4 hours. According to some embodiments, the lyogel is dried over a period of at least two hours. According to some embodiments, the lyogel is dried over a period of less than two hours.

Various aspects of the invention are described in greater detail in the following Examples, which represent embodiments of this invention, and are by no means to be interpreted as limiting the scope of this invention.

### EXAMPLES

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

### Example 1

### Preparation of cellulose solution

A 5 %wt. solution was prepared by dissolving 0.076g of cellulose microcrystalline powder (Aldrich) (0.076 g) was dissolved in 1.51g EMIMAc (BASF) by heating to a temperature of 88±2°C for 1 hour under continuous stirring.

### Preparation of cellulose hydrogel

The 5% cellulose solution prepared above was precipitated at room temperature with deionized water (25 °C; 30 ml water per 100 ml of solution) to receive a cellulose hydrogel.

### Hydrophobization of cellulose hydrogel

0.1 mol of TMCS were added to the hydrogel/HMDSO suspension per mol of cellulose hydrogel) at a temperature of 65°C), resulting to domination of different reactions eqns (1) - (3). After allowing the materials to react for 15 minutes the resulting liquids were drained and lyogel was rinsed in pure HDMSO for 30 min.

### Drying of the cellulose lyogel

The resulting cellulose lyogel prepared above was put into a plastic cup and dried in a vacuum oven at a temperature 90 °C during 18 hours.

### Materials characterization

Shrinkage after drying of the pure cellulose hydrogel sample (initial cellulose solution in EMIMAc was 3 %wt.; solution was prepared at 60 °C) was 75%±3% at that time as the shrinkage of the hydrophobized cellulose lyogel, prepared according to the described method, was 20±3%.

It was found that the network structure becomes finer and the pores smaller, the higher the cellulose concentration:: aerocellulose prepared from the 0.5 %wt. solution has an average pore diameter of 2520 nm with a deviation of 1030 nm; aerocellulose prepared from a 2%wt. solution has an average pore diameter of 1100 nm with a deviation of ±360nm; and aerocellulose prepared from a 6 %wt. solution has an average pore diameter of 350 nm with a deviation of ±75nm. Thus, the pore size spectrum becomes more regular with an increasing cellulose content.

### Example 2

### Preparation of a phase change material

Cellulose microcrystalline powder (Aldrich) (1.076 g) was dissolved in EMIMAc (BASF) (21.4 g) by heating at temperature of 88±2 °C for 45 min under continuous stirring.

4 g n-eicosane (Aldrich) and 3 g of the surfactant Span80® (Aldrich) were added to the hot solution. The mixture was sonicated for 20 min at 88±2 °C (sonication power 40 W) to form the stable eicosane/ionic liquid cellulose solution emulsion. A phase change material (PCM) was precipitated from the emulsion with hot (90 °C) water and rinsed four times with deionized water at room temperature (400ml). The obtained PCM was dried in a vacuum oven at 80 °C for 8 h. The obtained porous cellulose material has pores of a diameter of about 500±300 nm, filled with eicosane, and possesses a good shape stability and latent heat of about 180 J/g.

## Claims

1. A process for preparing aeropolysaccharides comprising:
a. mixing polysaccharide in a reaction medium;
b. adding an anti-solvent to the reaction medium, which creates a lyogel that includes a polysaccharide structure and pores filed with the reaction medium;
c. adding a hydrophobization agent to the reaction medium;
d. removing excess amounts of the reaction medium found outside the pores of the lyogel; and
e. drying said lyogel by removing the reaction medium found inside the pores of the lyogel, without harming the structure of the lyogel.

2. The process according to claim 1, further comprising molding, casting or compressing said aeropolysaccharide before or during the removal of the excess reaction medium or before or during the drying of the lyogel.

3. The process according to either claim 1 or 2, wherein said anti-solvent is added to the reaction medium before, together with, or after the addition of said hydrophobization agent.; wherein said anti-solvent is water.

4. The process according to any preceding claim, wherein said polysaccharide is cellulose.

5. The process according to any preceding claim, wherein said polysaccharide is mixed in an ionic liquid.

6. The process according to any preceding claim, wherein said hydrophobization agent comprises hexamethyldisiloxane (HMDSO), trimethylchlorosilane (TMCS) or bis-(trimethyl)-silylcarbamate (BSC) or any combination thereof; wherein said hydrophobization agent reacts with the polysaccharide to yield a silylated polysaccharide and aeropolysaccharide and optionally wherein said hydrophobization agent further comprises pyridine.

7. The process according to any preceding claim, wherein said lyogel is dried in an oven, by vacuum, in a heated vacuum oven.

8. The process according to any preceding claim, further comprising the addition of at least one reinforcement material, providing a reinforced aeropolysaccharide and/or addition of polysiloxane and/or addition of an energy storage material before said drying step.

9. The process of claim 6, wherein said silylated aeropolysaccharide is hydrolyzed.

10. A silylated aeropolysaccharide or reinforced silylated aeropolysaccharide.

11. The silylated aeropolysaccharide or reinforced silylated aeropolysaccharide of claim 12, wherein said aeropolysaccharide is aerocellulose and said aerocellulose has a moisture uptake of between 3-10%.

12. The silylated aeropolysaccharide or reinforced silylated aeropolysaccharide of claim 12, wherein said aeropolysaccharide is aerocellulose and said, aerocellulose is molten.

13. The silylated aeropolysaccharide or reinforced silylated aeropolysaccharide of claim 12, comprising an energy storage material.

14. An aeropolysaccharide or reinforced aeropolysaccharide comprising an energy storage material.

15. Use of an aeropolysaccharide according to claims 15 and 16 as a phase change material (PCM), wherein said energy storage material is found within the pores of said aeropolysaccharide.
